# EUROPÄISCHE PATENTSCHRIFT

(11) **EP 0 728 601 B1**
(45) Veröffentlichungstag und Bekanntmachung des Hinweises auf die Patenterteilung: **27.10.1999**
(21) Anmeldenummer: 96100201.1
(22) Anmeldetag: 09.01.1996
(51) Int. Cl.: B60G 9/00, B60B 35/06

(54) **Nichtangetriebende Vorder-, Vor- oder Nachlaufachse eines Nutzfahrzeuges, insbesondere Lastkraftwagen oder Omnibus**
Non-driving front-, leading- or trailing-axle of a utility vehicle, especially of a truck or bus
Essieu non-moteur avant, poussé ou traîné de véhicule utilitaire, notamment camion ou omnibus

(30) Priorität: 25.02.1995 DE 19506658; 28.06.1995 DE 19523404
(43) Veröffentlichungstag der Anmeldung: 28.08.1996
(73) Patentinhaber: MAN Nutzfahrzeuge Aktiengesellschaft, 80976 München (DE)
(72) Erfinder: Diehl, Ernst-Ludwig, Dipl.-Ing., D-81247 München (DE); Junginger, Jörg, Dipl.-Ing. (FH), D-80809 München (DE); Eberhard, Martin, Dipl.-Ing. (FH), 83737 Irschenberg (DE)

(56) Entgegenhaltungen:
- DE-C- 4 107 306
- FR-A- 2 683 487
- GB-A- 390 838
- GB-A- 2 274 629
- PATENT ABSTRACTS OF JAPAN vol. 015, no. 339 (M-1152), 28.August 1991 & JP-A-03 132412 (NISSAN MOTOR CO LTD), 5.Juni 1991,

## Beschreibung

Die Erfindung betrifft eine nichtangetriebene Vorder-, Vor- oder Nachlaufachse eines Nutzfahrzeuges, insbesondere Lastkraftwagen oder Omnibus mit Merkmalen entsprechend dem Oberbegriff des Anspruchs 1.

Die Erfindung geht aus von einer aus der FR 26 83 487 A1 bekannten Achse. Diese weist die gattungsgemäßen Merkmale auf. Ihr Achskörper ist durch ein Stahlrohr mit rechteckigem Querschnitt gebildet, an dem die notwendigen Anschlußorgane wie Stützplateaus für Luftfedern und Lagerböcke für den Anschluß der Lenker angeschweißt sind. Die oberen Lenker entsprechen dem Prinzip eines aufgelösten Dreieckslenkers, sind aber mit ihren achsseitigen Enden sehr nahe beieinander oben am Achskörper angelenkt. Diese Art der Anlenkung bzw. Achsführung bedingt eher einen torsionsweichen Achskörper.

Weiterhin ist aus der GB 22 74 629 A eine Achsführung bekannt, bei der zwei obere gepfeilt angeordnete Längslenker schiebend von hinten her am Achskörper der Starrachse und zwei weitere, untere gepfeilt angeordnete Längslenker oder ein Dreieckslenker ziehend von vorne her am Achskörper der Starrachse angelenkt sind.

Desweiteren kennzeichnet sich eine aus der DE 41 07 306 C1 bekannte Achse durch die Kombination eines weitgehend biege- und torsionssteifen Achskörpers mit einer speziellen Achsführung. Letztere umfaßt
a) ein am Achskörper befestigtes, diesen vorn überragendes Längslenker-Paar zur Momentenabstützung und Längsführung auf einer Seite der Achse, und
b) ein am Achskörper - diesen vorn und hinten überragend - befestigtes Längsfederblatt auf der anderen Seite der Achse zu deren diesseitiger Seiten- und Längsführung, und
c) eine vordere rahmenfeste Anlenkung für das Längsfederblatt, und
d) eine hintere rahmenfeste, aber längsweiche Anlenkung zur Seitenführung und Vertikalkraftaufnahme aus der Momentenabstützung für das Längsfederblatt, und
e) eine vordere rahmenfeste Anlenkung für das Längslenker-Paar, und
f) eine hintere achskörperseitig feste Anlenkung für das Längslenker-Paar, und
g) eine Zusatzfeder auf der Seite des Längslenker-Paares zum Ausgleich der Vertikalfederkonstante des andernseitigen Längsfederblattes mit beiderseits (bezogen auf den Achskörper) gleicher Nullage.

Diese bekannte Achse ist mit einem geschmiedeten Achskörper mit Doppel-T-Querschnitt und vergleichsweise starkem Vertikalsteg offenbart. Um das Kriterium der Biege- und Torsionssteifigkeit zu erfüllen, muß der geschmiedete Achskörper querschnittsmäßig entsprechend dimensioniert werden, was zu Gewichtsproblemen führen kann. Überdies wird der Einbauraum, den diese bekannte Achse aufgrund ihrer Achsführung beansprucht, hauptsächlich durch das den Achskörper vorn und hinten überragende Längsfederblatt bestimmt. Außerdem sind zwei stabförmige Längslenker und eine Zusatzfeder notwendig. Ersichtlicherweise ist diese Achsführung relativ anspruchsvoll und wegen der vielen unterschiedlichen Achsführungsorgane auch relativ teuer in der Herstellung.

Es ist daher Aufgabe der Erfindung, eine Achse der gattungsgemäßen Art dahingehend auszubilden, daß sie im Fahrzeug auch bei hohen Fahrgeschwindigkeiten sauber geführt, außerdem die Führung durch möglichst wenige, einfache und billige Organe realisierbar ist, die in Verbindung mit dem möglichst leichtgewichtig auszuführenden Achskörper auch weniger Einbauraum als bekannte Lösungen benötigen und so angeordnet sind, daß bei einem Omnibus ein sehr niedriger Mittelgang und bei Lastkraftwagen ein sehr tiefer Motor- und Getriebeeinbau über dem Achskörper realisierbar ist.

Diese Aufgabe ist gemäß Anspruch 1 bei einer Achse erfindungsgemäß durch Kombination von deren gattungsgemäßen Merkmalen mit einem speziellen Achskörper mit einer speziellen Achsführung, wie im Kennzeichen angegeben, gelöst.

Vorteilhafte Ausgestaltungen dieser Lösung sind in den Unteransprüchen angegeben.

Die erfindungsgemäße Achse ermöglicht bei Omnibussen einen sehr niedrigen Mittelgang und bei Lastkraftwagen einen tiefen Motor- und Getriebeeinbau über dem Achskörper, wobei sich die vier Lenker längs des Mittelganges bzw. des Motors erstrecken. Ersichtlicherweise wurde somit durch die Art und Anordnung der achsführenden Lenker in Kombination mit der Gestaltung des Achskörpers eine einfacheund platzsparende Achse geschaffen, deren präzise Achsführung einen Einsatz in Fahrzeugen ermöglicht, die für hohe Geschwindigkeiten zugelassen sind, wie Überland- und Reiseomnibusse und Fernverkehrslastkraftwagen.

Zur Führung der Achse werden vier gerade, stabförmige Lenker verwendet, so, wie sie als Standardbauteile im Nutzfahrzeugbau üblicherweise zum Einsatz kommen, wobei die beiden oberen in Fahrzeuglängsrichtung angeordnet sind und die unteren als aufgelöster Dreieckslenker horizontal und in einem bestimmten Winkel zur Fahrzeuglängsachse liegen. Die breite Anschlußbasis der unteren Lenker ist achskörperseitig gegeben, so daß die groß bauenden Gelenke sich beim Einfederungsvorgang über die untere Begrenzung des Freiraums in der Fahrzeugmitte für Mittelgang im Omnibus bzw. Motor im Lkw bewegen können. Rahmenseitig können die Gelenkköpfe somit unmittelbar unter dem benötigten Freiraum befestigt werden. Auch das Wankzentrum liegt auf der Höhe dieser unteren Lenker.

Zum Vergleich: Befände sich die schmale Anschlußbasis der unteren Lenker am Achskörper, müßte dessen Lage zumindest um den Einfederweg nach unten verschoben werden, womit die Bodenfreiheit entsprechend reduziert und das Wankzentrum abgesenkt würde. Ferner ergäbe sich beim Bremsen eine hohe horizontale Biegebeanspruchung des Achskörpers mit einem Maximum in der Mitte, was durch entsprechende Dimensionierung berücksichtigt werden müßte.

Die Achse wird statisch bestimmt in Quer- und Längsrichtung geführt und es erfolgt - betrachtet man die Gelenke der Achsführungslenker als ideale Kugelgelenke - keine Verspannung der Elemente bei Einbau, bei Ein- und Ausfederung sowie bei Verschränkung. Von der Seite betrachtet entspricht die erfindungsgemäße Achsführung annähernd einem Parallelogramm, was insbesondere für gelenkte Achsen besonders wichtig ist, um über den Federweg Nachlaufänderungen zu vermeiden.

Querkräfte werden von den beiden unteren Lenkern aufgenommen. Dabei entsteht ein Moment um die Hochachse aus dem Hebelarm, entsprechend dem Abstand vom Schnittpunkt der Wirklinien der unteren Lenker bis zu der Achsmitte, und der Querkraft. Diesem Moment kann nur durch ein Kräftepaar in den oberen Lenkern entgegengewirkt werden, wobei der eine auf Zug und der andere auf Druck belastet wird.

Der Achskörper als verbindendes Element wird dabei zwischen dem rechten und linken Lenkerpaar auf Torsion beansprucht. Um negative Auswirkungen der Torsionsbelastung auf das Fahrverhalten auszuschalten, wird die erfindungsgemäße Art der Achsführung mit einem verwindungssteifen Achskörper kombiniert.

Die beste Lösung für die Realisierung des biege- und torsionssteifen Achskörpers ist jene, diesen durch ein mittelabschnittig hohles Gußteil darzustellen. Der gegossene Achskörper bietet die besten Möglichkeiten, einen steifen Querschnitt zu schaffen und den Übergangsbereich vom Mittelabschnitt zu den beiden Endbereichen hin spannungsoptimiert zu gestalten. Desweiteren können dem gegossenen Achskörper auch weitere Funktionen aufgeprägt werden, in dem an ihm als feste integrale Bestandteile Lagerböcke, Tragböcke, Lageraugen und Vorsprünge zur Abstützung und Anlenkung von Feder- und Dämpfungsorganen sowie der achsführenden Lenker mit-angießbar sind.

Hierdurch ergibt sich auch achskörperseitig eine beträchtliche Kosteneinsparung. Dabei ist zwar der gegossene Achskörper in seiner Herstellung teurer als z.B. ein geschmiedeter Achskörper aus Stahl. Weil am gegossenen Achsträger aber sämtliche Anschlußorgane für die daran anzulenkenden Fahrzeug- und Führungsteile bereits mitangegossen sind und diese somit nicht mehr wie bisher in Form von separat herzustellenden und anzubringenden Lagerböcken realisiert werden müssen, ergibt sich in der Gesamtschau aller Kosten der gewünschte Einsparungseffekt. Hinsichtlich seiner Tragfähigkeit und Belastbarkeit im Fahrbetrieb erreicht der gegossene Achskörper einschließlich seiner mitangegossenen Tragböcke, Augen und Vorsprünge an sich bessere Werte als ein vergleichbarer Achskörper geschmiedeter Bauart. Letzterer müßte der Zielsetzung gehorchend hinsichtlich seiner Querschnitte über die festigkeitsmäßig notwendigen dimensioniert werden, was aber aus Sicht der Führungsqualitäten und Kostenvorteile der erfindungsgemäßen Aufhängung tolerierbar ist.

Nachstehend sind die erfindungsgemäßen Lösungen anhand von in der Zeichnung dargestellten Ausführungsbeispielen noch näher erläutert. In der Zeichnung zeigen:
- Fig. 1: Achskörper und Führung einer Achse eines Nutzfahrzeuges gemäß der Erfindung im Prinzip in Vorderansicht,
- Fig. 2: die Achse gemäß Fig. 1 in Seitenansicht,
- Fig. 3: die Achse gemäß Fig. 1 in Draufsicht,
- Fig. 4: eine Vorderachse eines Nutzfahrzeuges gemäß der Erfindung in Perspektivansicht schräg von hinten,
- Fig. 5: die Vorderachse gemäß Fig. 4 in Perspektivansicht schräg von vorn,
- Fig. 6: einen Achskörper erfindungsgemäßer Bauart in Vorderansicht, wie bei der Achse gemäß Fig. 4 und 5 verwendet,
- Fig. 7: den Achskörper gemäß Fig. 6 in Seitenansicht,
- Fig. 8: einen Längsschnitt durch den Achskörper gemäß Fig. 6,
- Fig. 9: einen Querschnitt durch den Achskörper gemäß Fig. 6 entlang der dort eingetragenen Schnittlinie A-A,
- Fig. 10: einen Querschnitt durch den Achskörper gemäß Fig. 6 entlang der dort eingetragenen Schnittlinie B-B, und

In den Figuren sind der Übersichtlichkeit wegen gleiche oder einander entsprechende Teile mit gleichen Bezugszeichen angezogen.

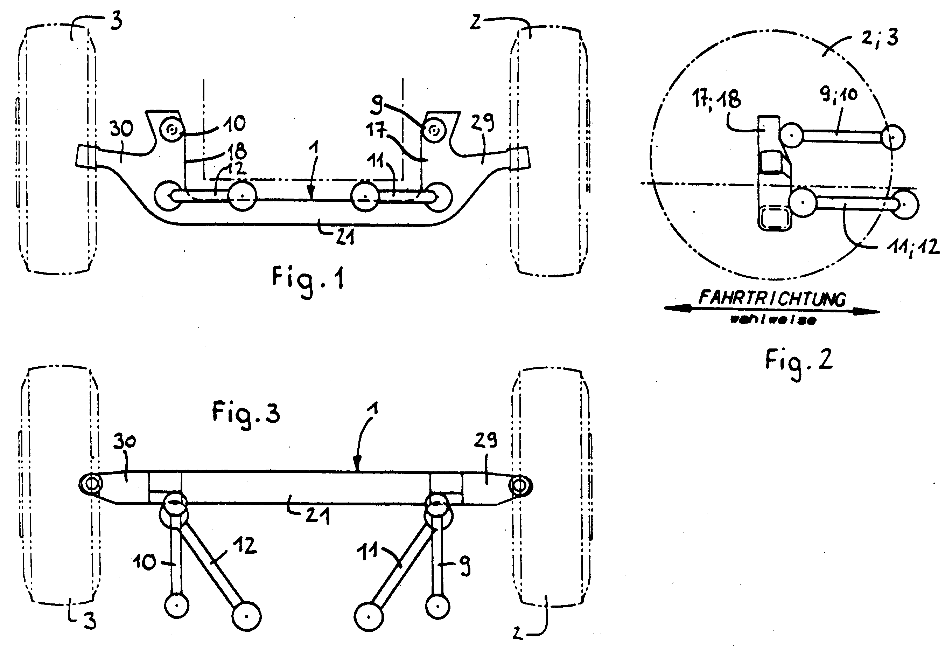

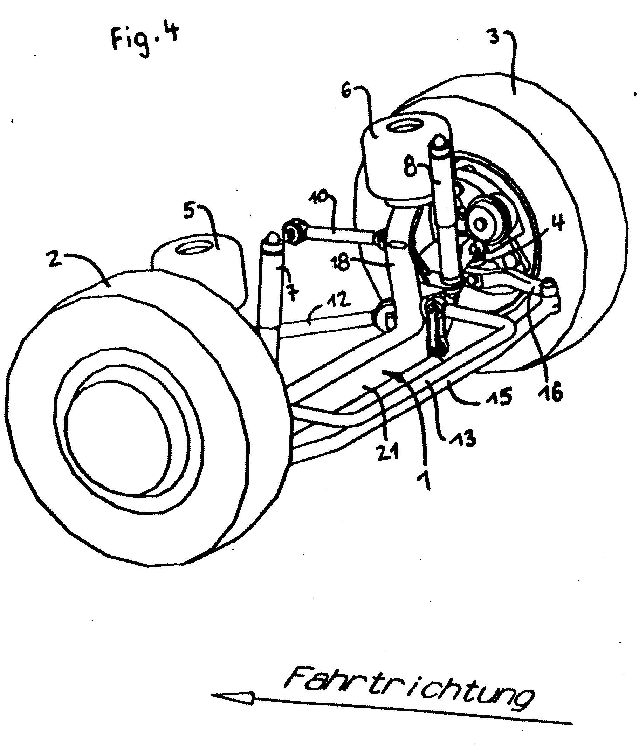

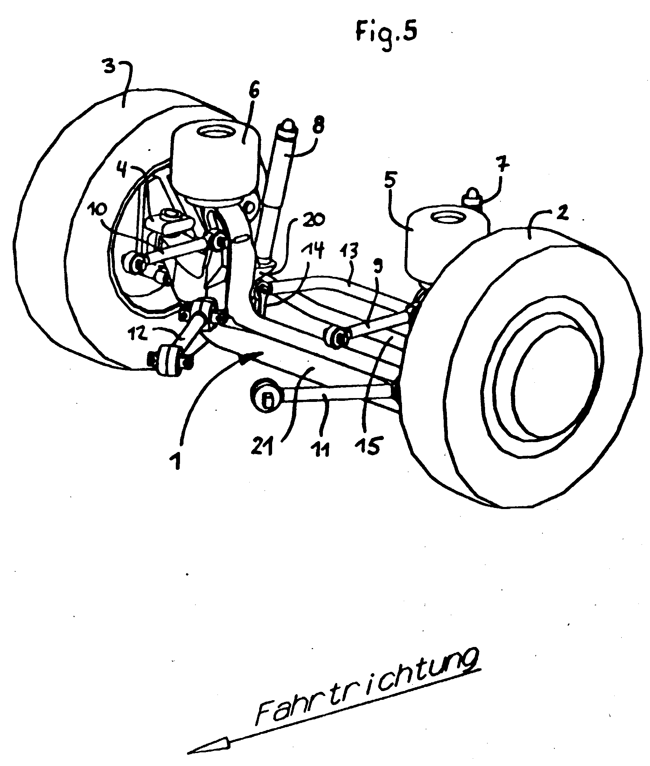

Die in ihrer Gesamtheit besonders gut aus Fig. 4 und 5 ersichtliche nichtangetriebene Vorder-, Vor- oder Nachlaufachse eines Nutzfahrzeuges, insbesondere Lastkraftwagen oder Omnibus, weist als zentrales Tragteil einen starren Achskörper 1 auf, der unabhängig von der weiteren Ausgestaltung der Achse und deren Aufhängung in jedem Fall biege- und torsionssteif und im Mittelabschnitt hohl ausgebildet ist. Mit 2 und 3 ist jeweils ein Rad bezeichnet, das an einem Radträger 4 gelagert ist, der wiederum am Achskörper 1 angelenkt ist. Der starre Achskörper 1 ist über Federungsorgane, entweder Blattfedern bzw. Blattfederpakete oder - wie in Fig. 4 und 5 dargestellt - über Luftfedern 5, 6 gegenüber dem nicht dargestellten Rahmen des Nutzfahrzeuges abgefedert. Zur Dämpfung der Federbewegungen sind Stoßdämpfer 7, 8 vorgesehen, die oben am Rahmen des Nutzfahrzeuges und unten am Achskörper 1 angelenkt sind.

Die erfindungsgemäße Achse kennzeichnet sich durch die Kombination eines biege- und torsionssteifen, im Mittelabschnitt hohl ausgebildeten Achskörpers 1 mit einer aus vier stabförmigen Lenkern 9, 10, 11, 12 in spezieller Anordnung gegebenen Achsführung.

Innerhalb der Achsführung sind
- die beiden oberen Lenker 9, 10 höhengleich parallel oder leicht gepfeilt (ca. 5 - 10°) zueinander in einer parallel oder leicht schräg (ca. 5 - 10°) zur Fahrbahn verlaufenden Ebene angeordnet,
- die beiden unteren Lenker 11, 12 als aufgelöster Dreieckslenker gepfeilt zueinander in einer parallel oder leicht schräg (5 - 10°) zur Fahrbahn verlaufenden Ebene angeordnet,
- alle vier Lenker 9, 10, 11, 12 einenendes am Rahmen, dort in festen Lagerstellen, und andernendes an gleicher Seite des Achskörpers 1, also entweder vorn oder hinten an diesem an festen Lagerstellen angelenkt,
- die beiden unteren Lenker 11, 12 am Achskörper 1 mit größerem Abstand als am Rahmen angelenkt, und
- die beiden linken Lenker 9, 11 in Bezug auf die Längsmittelhochebene des Fahrzeuges spiegelsymmetrisch zu den beiden rechten Lenkern 10, 12 angeordnet.

Von der Seite her betrachtet entspricht diese Achsführung annähernd einem Parallelogramm.

Der Abstand der achskörperseitigen Anlenkstellen der oberen Lenker 9, 10 ist bevorzugt gleich oder annähernd gleich dem Abstand der achskörperseitigen Anlenkstellen der unteren Lenker 11, 12, was gut aus Fig. 1 und 3 hervorgeht. Dabei ist der Abstand der Anlenkstellen der oberen Lenker 9, 10 so groß wie möglich gehalten, um die Kräfte in den oberen Lenkern 9, 10 bei der Querführung gering zu halten.

Die Wankachse der Achse liegt auf der Schnittlinie der Längsmittelhochebene des Nutzfahrzeuges mit der die unteren Lenker 11, 12 aufnehmenden Fahrzeugquerebene.

Die unteren Lenker 11, 12 dienen sowohl zur Längs- als auch Querführung der Achse, während die oberen Lenker 9, 10 nur zur Längsführung der Achse dienen.

Um die Wankneigung bei Fahrzeugen mit hohem Schwerpunkt einzuschränken, kann es sich als zweckmäßig erweisen, als zusätzliches Achsführungs- und Achsstabilisierungsprogramm einen Stabilisator 13, beispielsweise einen solchen wie in Fig. 4 und 5 dargestellten, in Draufsicht gesehen etwa U-förmigen vorzusehen, der endseitig der U-Schenkel über Schwingen 14 am Achskörper 1 und in nicht dargestellter Weise über an seinem U-Grundschenkel angreifende starre oder nachgiebige Halter am Rahmen des Nutzfahrzeuges angelenkt ist.

Bei einer Achse mit gelenkten Rädern 2, 3 ist außerdem - wie aus Fig. 4 und 5 ersichtlich - eine Lenkspurstange 15 vorgesehen, die an beiden Enden jeweils gelenkig mit einer am jeweiligen Radträger 4 befestigten Spurführungsstange 16 verbunden ist.

Bei einer Achse mit gelenkten Rädern erfolgt die Anlenkung der Radträger 4 am Achskörper 1 über einen Achsschenkelbolzen, dessen Längsachse gleichzeitig auch die Schwenkachse des Rades 2 bzw. 3 bildet. Bei Achsen mit ungelenkten Rädern dagegen wird der Radträger 4 lagefest am jeweiligen äußeren Ende des Achskörpers 1 befestigt.

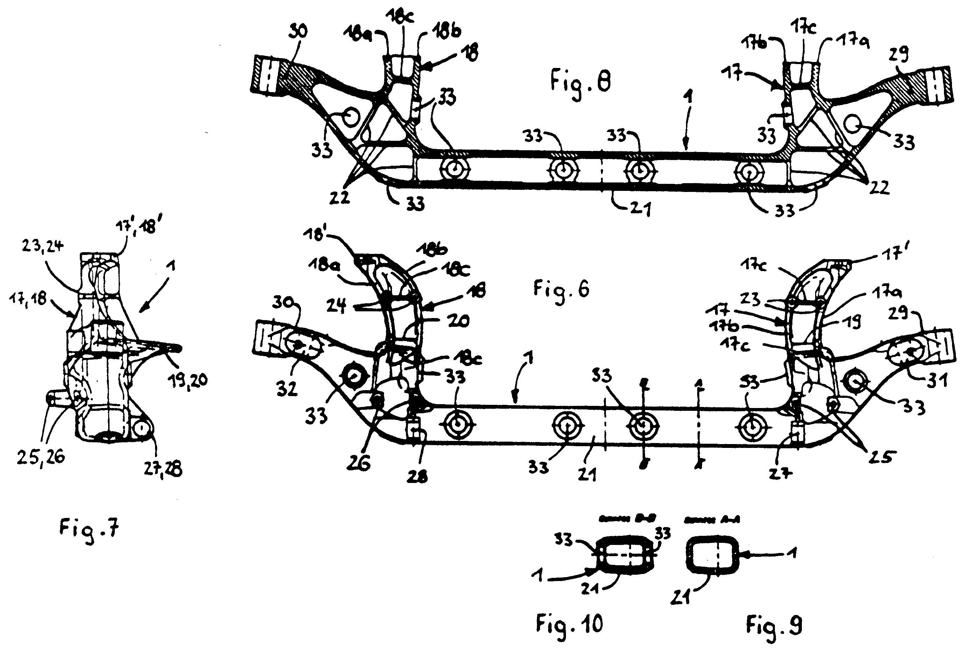

In erfinderischer Weise ist der Achskörper 1 der Achse durch einen biege- und torsionssteifen, im Mittelabschnitt hohlen gußkörper gebildet, an dem als feste bzw. integrale Bestandteile Tragböcke 17, 18 für Abstützung und Anschluß der Federungsorgane, im dargestellten Fall der Luftfedern 5, bzw. 6, sowie Tragböcke 19, 20 für die Anlenkung der unteren Enden der Stoßdämpfer 7, 8 und außerdem Augen bzw. Vorsprünge für den Anschluß und die Befestigung der achsführenden Lenker 9, 10, 11, 12 sowie hier auch des Stabilisators 13 mitangegossen sind. Auf Einzelheiten hierzu ist nachfolgend unter Bezugnahme auf die Fig. 6 bis 10 näher eingegangen. Der dort dargestellte, einer Achse mit lenkbaren Rädern 2, 3 zugeordnete Achskörper 1 gehorcht hinsichtlich seiner Grundform. wie aus Fig. 6 und 8 ersichtlich, jener einer gekröpften Faustachse. Dabei weist der gegossene Achskörper 1 einen geraden hohen Mittelabschnitt 21 mit etwa rechteckigem Querschnitt auf, siehe die Schnitte gemäß Fig. 9 und 10. Am jeweiligen Übergangsbereich von diesem Mittelabschnitt 21 zum äußeren hochgekröpften Endbereich hin ist am Achskörper 1 der jeweilige Tragbock 17 bzw. 18 weit nach oben abragend mit angegossen. Dessen oberer Endbereich ist als Anschlußkopf 17' bzw. 18' für Abstützung und Befestigung des Federorgans 5 bzw. 6 ausgebildet. Jeder der beidenTragböcke 17, 18 besteht im dargestellten Ausführungsbeispiel aus zwei obenseitig des Achskörpers 1 abgehenden, voneinander beabstandeten Tragwänden 17a, 17b bzw. 18a, 18b, die durch wenigstens eine Querrippe 17c bzw. 18c miteinander verbunden sind und oben in den Anschlußkopf 17' bzw. 18' übergehen. Zur Formstabilisierung und Beherrschung der vom jeweiligen Tragbock 17 bzw. 18 mit Federorgan 5 bzw. 6 einzuleitenden Kräfte weist der gegossene Achskörper 1 innerhalb jedes Übergangsbereiches vom Mittelabschnitt 21 zum äußeren Endbereich mehrere Stützstreben 22 auf, die in diesem besonders kritischen Bereich des Achskörpers 1 die dortigen Wandabschnitte fachwerkartig miteinander verbinden, siehe Fig. 8. Wie gut aus Fig. 6 ersichtlich, sind an jedem der beiden Tragböcke 17, 18 - hier frontseitig - an den Tragwänden 17a, 17 b bzw. 18a, 18b durch Vorsprünge gebildete Augen 23 bzw. 24 mit angegossen, die zur Anlenkung jeweils eines der beiden oberen Lenker 9 bzw. 10 dienen. Die zur Anlenkung jeweils eines der beiden unteren Lenker 11, 12 dienenden Augen 25 bzw. 26 sind durch etwa im Bereich des jeweiligen Überganges vom Mittelabschnitt 21 zum äußeren Endabschnitt des Achskörpers 1 an diesem durch stirnseitig mitangegossene Vorsprünge gebildet. Für die Anlenkung des Stabilisators 13 sind am Achskörper 1, dort etwa im Bereich des jeweiligen Überganges vom Mittelabschnitt 21 zum äußeren Endbereich, stirnseitig vorn oder hinten, im dargestellten Beispiel hinten, vorspringende Augen 27 und 28 mitangegossen.

An seinen beiden äußeren Endbereichen weist der ansonsten - mittelabschnittig - hohle Achskörper 1 vollmaterialig vergossene Anschlußköpfe bzw. -augen 29, 30 - siehe insbesondere Fig. 8 - für die Anlenkung der beiden Radträger 4 auf. Die konkrete Ausgestaltung der beiden Anschlußköpfe 29, 30 hängt davon ab, ob gelenkte oder ungelenkte Räder am gegossenen Achskörper 1 angeschlossen werden sollen, und wird in Verbindung mit einer entsprechenden konstruktiven Gestaltung des jeweils anzuschließenden Radträgers 4 aufeinander abgestimmt. Bei Verwendung der Achse mit gelenkten Rädern sind am zugehörigen gegossenen Achskörper 1 im Bereich von dessen beiden Anschlußköpfen 29, 30 stirnseitig vorn und hinten Vorsprünge 31, 32 mitangegossen, die entweder direkt als Anschläge oder als Träger für daran zu befestigende Anschläge zur Radeinschlagwinkelbegrenzung dienen.

Der gegossene Achskörper 1 kann durch Sphäroguß, beispielsweise aus GGG 40, GGG 50, GGG 60, oder aus Stahlguß im Sandgußverfahren mit relativ dünnen Wänden hergestellt werden. Wie aus den Fig. 6, 8 und 10 gut ersichtlich, weist der gegossene Achskörper 1 in seiner Außenwand mehrere Löcher 33 auf, die von den Halterungen des Gießkernes in der Gußform herrühren und später, wenn der Achskörper 1 in einbaufertiger Form vorliegt, durch Deckel verschlossen sind. Nach dem Abgießen des Achskörpers 1 wird dieser an all jenen Stellen, an denen die Radträger 4, Federungsorgane 5, 6, Stoßdämpfer 7, 8, Längslenker 9, 10, 11, 12 sowie der Stabilisator 13 angeschlossen werden, spanabhebend nachbearbeitet, um die entsprechenden Anlageflächen sowie Lagerbohrungen zu erzeugen.

## Patentansprüche

1. Nichtangetriebene Vorder-, Vor- oder Nachlaufachse eines Nutzfahrzeuges, insbesondere Lastkraftwagen oder Omnibus, die einen lenkbare oder ungelenkte Räder (2, 3) tragenden sowie über Federungs- und Dämpfungsorgane (5, 6; 7, 8), gegebenenfalls auch Stabilisierungsorgane (13), gegenüber dem Rahmen abgestützten starren, im Mittelabschnitt hohlen Achskörper (1) und eine aus vier stabförmigen Lenkern (9, 10, 11, 12) bestehende Achsführung aufweist, wobei
- die beiden oberen Lenker (9, 10) höhengleich parallel oder leicht gepfeilt zueinander in einer parallel oder leicht schräg zur Fahrbahn verlaufenden Ebene angeordnet sind,
- die beiden unteren Lenker (11, 12) als aufgelöster Dreieckslenker gepfeilt zueinander in einer parallel oder leicht schräg zur Fahrbahn verlaufenden Ebene angeordnet sind,
- alle vier Lenker (9, 10, 11, 12) einenendes am Rahmen, dort in festen Lagerstellen, andernendes an gleicher Seite des Achskörpers (1), also entweder vorn oder hinten an diesem an festen Lagerstellen gelenkt sind,
- die beiden linken Lenker (9, 11) in Bezug auf die Längsmittelhochebene des Fahrzeugs spiegelsymmetrisch zu den beiden rechten Lenkern(10, 12) angeordnet sind,
gekennzeichnet durch die Kombination mit folgenden Merkmalen, nämlich
- der Achskörper (1) ist durch einen biege- und torsionssteifen, im Mittelabschnitt (21) hohlen Gußkörper gebildet, an dem als feste bzw. integrale Bestandteile Tragböcke (17, 18) für Abstützung und Anschluß der Federungsorgane, insbesondere Luftfedern (5, 6), sowie Tragböcke (19, 20) für die Anlenkung von Stoßdämpfern (7, 8) und außerdem Augen bzw. Vorsprünge (23, 24; 25, 26; 27, 28) für Anschluß und Befestigung der achsführenden Lenker (9, 10, 11, 12) und gegebenenfalls auch eines Stabilisators (13) mitangegossen sind, und
- innerhalb der Achsführung sind die beiden unteren Lenker (11, 12) am Achskörper (1) mit größerem Abstand als am Rahmen angelenkt.

2. Achse nach Anspruch 1, dadurch gekennzeichnet, daß der gegossene Achskörper (1) hinsichtlich seiner Grundform jener einer gekröpften Faustachse gehorcht.

3. Achse nach Anspruch 1 oder 2, dadurch gekennzeichnet, daß der hohle Mittelabschnitt (21) am gegossenen Achskörper (1) einen rechteckigen Ringquerschnitt aufweist.

4. Achse nach einem der vorhergehenden Ansprüche, dadurch gekennzeichnet, daß am jeweiligen Übergangsbereich vom Mittelabschnitt (21) des gegossenen Achskörpers (1) zum äußeren Endbereich ein weit nach oben abragender Tragbock (17 bzw. 18) am Achskörper (1) mitangegossen ist, an dessen Oberseite ein Federorgan (5 bzw. 6) abgestützt befestigbar ist.

5. Achse nach Anspruch 4, dadurch gekennzeichnet, daß jeder Tragbock (17, 18) aus zwei oberseitig des Achskörpers (1) abgehenden, voneinander beabstandeten Tragwänden (17a, 17b; 18a, 18b) besteht, die durch wenigstens eine Querrippe (17c; 18c) miteinander verbunden sind und oben in einen Anschlußkopf (17', 18') für das Federorgan (5, 6) übergehen.

6. Achse nach Anspruch 4, dadurch gekennzeichnet, daß - zur Formstabilisierung und Beherrschung der vom darüber abgehenden Tragbock (17, 18) mit Federorgan (5, 6) einzuleitenden Kräfte - der gegossene Achskörper (1) innerhalb jedes Übergangsbereiches von Mittelabschnitt (21) zum äußeren Endbereich mehrere Stützstreben (22) aufweist.

7. Achse nach Anspruch 4, dadurch gekennzeichnet, daß an jeden Tragbock (17, 18) für ein Federorgan (5, 6) Augen bzw. Vorsprünge (23, 24) für die Anlenkung eines oberen Lenkers (9, 10) mitangegossen sind.

8. Achse nach Anspruch 4, dadurch gekennzeichnet, daß am gegossenen Achskörper (1), dort etwa im Bereich des jeweiligen Überganges vom Mittelabschnitt (21) zum äußeren Endbereich, stirnseitig vorn oder hinten Augen bzw. Vorsprünge (25, 26) für die Anlenkung der unterern Lenker (11, 12) mitangegossen sind.

9. Achse nach Anspruch 4, dadurch gekennzeichnet, daß am gegossenen Achskörper (1), dort etwa im Bereich des jeweiligen Überganges vom Mittelabschnitt (21) zum äußeren Endbereich, stirnseitig vorn oder hinten Augen bzw. Vorsprünge (27, 28) zur Anlenkung eines Stabilisators (13) mitangegossen sind.

10. Achse nach einem der Ansprüche 1 bis 3, dadurch gekennzeichnet, daß der ansonsten mittelabschnittig hohle Achskörper (1) an beiden äußeren Endbereichen vollmaterialig vergossene Anschlußköpfe bzw. -augen (29, 30) für die Anlenkung der beiden Radträger (4) aufweist.

11. Achse nach Anspruch 1, dadurch gekennzeichnet, daß der Abstand der achskörperseitigen Anlenkstellen der oberen Lenker (9, 10) gleich oder annähernd gleich dem Abstand der achskörperseitigen Anlenkstellen der unteren Lenker (11, 12) ist.

## Claims

1. Non-driven front, second-steering or trailing axle of a commercial vehicle, particularly of a truck or bus, which axle has a rigid axle body (1) that has a hollow centre, supports steered or non-steered wheels (2, 3) and is, relative to the frame, supported via suspension and damping organs (5, 6, 7, 8) and, if necessary, stabilising organs (13) and is equipped with an axle location system consisting of four rod-type arms (9, 10, 11, 12),
• the two upper arms (9, 10) being arranged at the same height either parallel or in a slightly arrow-type position relative to each other in a plane which is either parallel or slightly oblique to the road surface,
• the two lower arms (11, 12) being arranged as an open wishbone in a slightly arrow-type position relative to each other in a plane which is either parallel or slightly oblique to the road surface,
• all four arms (9, 10, 11, 12) being steered, at one end in fixed points positions on the frame and, at the other, on the same side of the axle body (1), ie either on the front or rear side of said axle body (1), in fixed points,
• the two left-hand arms (9, 11) being, in relation to the vertical longitudinal centre plane of the vehicle, arranged mirror-symmetrically relative to the two right-hand arms (10, 12),
characterised by the combination with the following features, namely that
• the axle body (1) is formed by a bending- and torsion-resistant cast body which is hollow in its centre area (21) and also features cast-on support blocks (17, 18) as rigid or integral components for the support and connection of suspension organs, particularly air springs (5, 6), and support blocks (19, 20) for the location of shock absorbers (7, 8) and also eyes and projecting elements (23, 24, 25, 26, 27, 28) for the connection and attachment of the axle-locating arms (9, 10, 11, 12) and, if necessary, also of a stabiliser (13), and
• within the axle location the two lower arms (11, 12) are located on the axle body (1) farther apart than they are on the frame.

2. Axle according to Claim 1, characterised in that the cast axle body (1) has the same basic shape as a dropped stub axle.

3. Axle according to Claim 1 or 2, characterised in that the hollow centre section (21) of the cast axle body (1) has a rectangular ring-type cross-section.

4. Axle according to one of the foregoing Claims, characterised in that in each of the transition areas from the centre section (21) of the cast axle body (1) to the outer end area a support block (17, 18) projecting far upwards is also cast on to the axle body (1), on the top side of which support block (17, 18) a suspension organ (5, 6) is supported and can be attached to it.

5. Axle according to Claim 4, characterised in that each support block (17, 18) consists of two support walls (17a, 17b, 18a, 18b) which extend from the top side of the axle body (1), are located at a distance to and connected with each other by at least one transverse spar (17c, 18c) and form at the upper end a connecting head (17', 18') for the suspension organ (5, 6).

6. Axle according to Claim 4, characterised in that in order to stabilise the form and control the forces to be introduced by the support block (17, 18) with suspension organ (5, 6), which support block (17, 18) is located above and extends from there, the cast axle body (1) is provided with several support struts (22) within each transition area from the centre section (21) to the outer end area.

7. Axle according to Claim 4, characterised in that eyes and projecting elements (23, 24) for the location of an upper arm (9, 10) are also cast on to each support block (17, 18) for a suspension organ (5, 6).

8. Axle according to Claim 4, characterised in that eyes and projecting elements (25, 26) for the location of the lower arms (11, 12) are also cast on to the front or rear end face of the axle body (1) approximately in the area of each transition from the centre section (21) to the outer end area.

9. Axle according to Claim 4, characterised in that eyes and projecting elements (27, 28) for the location of a stabiliser (13) are also cast on to the front or rear end face of the axle body (1) approximately in the area of each transition from the centre section (21) to the outer end area.

10. Axle according to one of the Claims 1 to 3, characterised in that the axle body (1), whose centre section is otherwise hollow, is provided at the outer end areas with solid cast connecting heads and eyes (29, 30) for the location of the two wheel carriers (4).

11. Axle according to Claim 1, characterised in that the distance between the location points on the axle body for the upper arms (9, 10) is identical or approximately identical with the distance between the location points on the axle body for the lower arms (11, 12).

## Revendications

1. Essieu avant, antérieur ou porteur-traîné, non entraîné d'un véhicule utilitaire, en particulier pour camion ou omnibus, présentant un corps d'essieu (1) creux en son tronçon médian, rigide, portant des roues directionnelles ou non directionnelles (2, 3) soutenu par rapport au châssis, par l'intermédiaire d'organes de suspension et d'amortissement (5, 6 ; 7, 8), ainsi que, le cas échéant également, d'organes de stabilisation (13), et présentant un guidage d'essieu constitué de quatre bras articulés (9, 10, 11, 12) en forme de barres, où
• les deux bras articulés supérieurs (9, 10) sont, au même niveau, disposés parallèlement ou légèrement en flèche l'un par rapport à l'autre, dans un plan parallèle ou légèrement incliné par rapport à la piste de roulement,
• les deux bras articulés inférieurs (11, 12) sont disposés, orientés l'un par rapport à l'autre en flèche sous la forme d'un bras articulé triangulé décomposé, dans un plan s'étendant parallèlement ou légèrement incliné par rapport à la piste de roulement,
• la totalité des quatre bras articulés (9, 10; 11, 12) étant articulés à une extrémité au châssis, à cet endroit dans des points de tourillonnement fixes, étant articulés à l'autre extrémité au même emplacement du corps d'essieu (1), donc soit à l'avant, soit à l'arrière sur celui-ci, en des points de tourillonnement fixes,
• les deux bras articulés gauche (9, 11) sont disposés, par rapport au plan vertical médian longitudinal du véhicule, en répondant à une symétrie par rapport aux deux bras articulés droit (10, 12),
caractérisé par la combinaison des propriétés ci-après, précisément :
• le corps d'essieu (1) est constitué par un corps de fonderie, creux dans le tronçon médian (21), présentant une rigidité en flexion et en torsion, corps sur lequel sont reliés, par moulage conjoint, à titre de composant fixe, respectivement monopièce, des blocs-support (17, 18) destinés à l'appui et au raccordement des organes de suspension, en particulier des ressorts pneumatiques, ainsi que des blocs-support (19, 20) destinés à l'articulation d'amortisseurs (7, 8) et, en outre, d'oeillets ou de saillies (23, 24; 25, 26; 27, 28) destinés au raccordement et à la fixation des bras articulés (9, 10, 11, 12) destinés au guidage de l'essieu et, le cas échéant, également d'un stabilisateur (13), et
• les deux bras articulés inférieurs (11, 12) sont articulés dans le guidage d'essieu sur le corps d'essieu (1), selon un espacement supérieur à l'espacement qu'il y a sur le châssis.

2. Essieu selon la revendication 1,
caractérisé en ce que
le corps d'essieu (1) moulé de fonderie appartient, du point de vue de sa forme de base, à un essieu à chapes fermées, coudé.

3. Essieu selon la revendication 2,
caractérisé en ce que
le tronçon médian (21) creux, réalisé sur le corps d'essieu (1) moulé de fonderie, présente une section transversale annulaire à forme rectangulaire.

4. Essieu selon l'une des revendications précédentes
caractérisé en ce que
sur la zone de transition respective, allant du tronçon médian (21) du corps d'essieu (1) moulé à la zone d'extrémité extérieure, est coulé d'une seule pièce sur le corps d'essieu (1), un bloc-support (17 ou 18) faisant saillie loin vers le haut, sur la face supérieure duquel un organe de suspension (5 ou 6) peut être fixé avec effet de soutien.

5. Essieu selon la revendication 4,
caractérisé en ce que
chaque bloc-support (17, 18) est constitué de deux parois support (17a, 17b; 18a, 18b) partant de la face supérieure du corps d'essieu (1), espacées l'une de l'autre qui sont reliées ensemble par au moins une nervure transversale (17c, 18c) et se transforment en partie haute en une tête de raccordement (17', 18') pour l'organe de suspension élastique (5, 6).

6. Essieu selon la revendication 4,
caractérisé en ce que
• pour obtenir une stabilisation de forme et une maîtrise des efforts à induire avec un organe élastique (5, 6) depuis le bloc-support (17, 18) partant du dessus,
• le corps d'essieu (1) moulé présente plusieurs entretoises d'appui (22), dans chaque zone de transition entre le tronçon médian (21) et la zone d'extrémité extérieure.

7. Essieu selon la revendication 4,
caractérisé en ce que
des oeillets ou des saillies (23, 24) destinées à l'articulation d'un bras articulé supérieur (9, 10) sont réunis par une coulée commune sur chaque bloc-support (17, 18) pour un organe élastique (5, 6).

8. Essieu selon la revendication 4,
caractérisé en ce que
sur le corps d'essieu (1) moulé, à cet endroit à peu près dans la zone de la transition respective entre le tronçon médian (21) et la zone d'extrémité extérieure, des oeillets ou des saillies (25, 26) sont moulés conjointement, frontalement à l'avant ou à l'arrière, pour l'articulation des bras articulés inférieurs (11, 12).

9. Essieu selon la revendication 4,
caractérisé en ce que
sur le corps d'essieu (1) moulé, à cet endroit près dans la zone de la transition respective entre le tronçon médian (21) et la zone d'extrémité extérieure, frontalement à l'avant ou à l'arrière, sont coulés conjointement des oeillets ou des saillies (27, 28) destinés à l'articulation d'un stabilisateur.

10. Essieu selon l'une des revendications 1 à 3,
caractérisé en ce que
le corps d'essieu (1) qui au reste est creux dans le tronçon médian, présente sur les deux zones d'extrémité extérieures des têtes ou des oeillets de raccordement (29, 30) moulés avec un remplissage massif par le matériau, pour l'articulation des deux supports de roues (4).

11. Essieu selon la revendication 1,
caractérisé en ce
l'espacement des points d'articulation situés du côté du corps d'essieu, des bras articulés supérieurs (9, 10), est identique ou à peu près identique à l'espacement entre les points d'articulation, situés du côté du corps d'essieu, des bras articulés inférieurs (11, 12).
